# EUROPEAN PATENT APPLICATION

(11) **EP 1 377 058 A2**
(43) Date of publication of application: **02.01.2004**
(21) Application number: 03010392.3
(22) Date of filing: 08.05.2003
(51) Int. Cl.: H04N 7/16

(54) **E-commerce facilitation for broadcast services**

(30) Priority: 18.06.2002 US 175353
(71) Applicant: MICROSOFT CORPORATION, Redmond, Washington 98052-6399 (US)
(72) Inventor: Fries, Robert, M., Redmond, Washington 98052 (US); Shield, Alan, E., Issaquah, Washington 98029 (US); Pezzee, Christopher, F., Redmond, Washington 98052 (US); Peechara, Arvind, K., Sunnyvale, California 94086 (US); Fleming, Michael, K., San Francisco, California 94114 (US)
(74) Representative: Grünecker, Kinkeldey, Stockmair & Schwanhäusser Anwaltssozietät

(57) **Abstract**

Described herein is a technology facilitating electronic commerce. One implementation, described herein, is a standardized purchasing system for purchasing premium services over a broadcast feed from premium service providers. This implementation offers a standardized technique facilitating electronic commerce purchases. It employs a standardized offer-terms format that contains the information for creation of an official offer to a user. With one of the implementations, described here, changing or adding premium service providers does not necessitate any changes to the one or more components of the Integrated Receiver/Decoders (IRD) devices so as to effectuate purchases of premiums services from such premium service providers. That is because purchases are handled in a standardized manner using a standardized offer-terms format.

## Description

### TECHNICAL FIELD

This invention is generally related to technology facilitating electronic ommerce.

### BACKGROUND

Before reaching a television set, multimedia broadcast signals are now commonly received and possibly processed by devices containing a microprocessor. Such devices include cable television set-top boxes, digital satellite television receivers, personal video recorders, and personal computers equipped with broadcast receiver hardware. They are commonly referred to as Integrated Receiver/Decoders (IRD) devices.

Premium services (or channels) are often amongst the multimedia broadcast signals received by IRD devices. Such services may include "pay-per-view" programming or video-on-demand (VoD) programming. Herein, this will be called a premium service provider (or PS provider). In order to view such programming, a viewer typically purchases them as desired and *à la carte*.

In order to consummate such a transaction, there must be an offer and acceptance. Consequently, the following tasks are performed to have a valid and legal transaction for premium services provided to the viewer when it is desired and *à la carte:*
- the PS provider communicates the terms of the offer to the viewer;
- the offer is presented to the viewer;
- the viewer interactively accepts the offer (or refuses it);
- acceptance of the offer is communicated to the PS provider;
- the premium service is provided to the viewer.

### Conventional Approaches to Premium Services Purchases

Typically, the PS provider communicates the terms of the offer to the IRD devices via in-band or out-of-band data associated with one or more channels of a broadcast signal. The format and content of these terms are typically proprietary. A component (such as an application) of the IRD devices receives the proprietarily formatted terms. The component is similarly proprietary; therefore, it can understand the format and content of the offer terms.

Typically, the viewer's acceptance is communicated back to the PS provider. With the viewer's acceptance of the offer, viewing of the premium service is allowed. When two-way communication is practical, the PS provider may validate the purchase. When validated, viewing is allowed.

### Drawbacks to the Conventional Approaches

Typically, PS providers are vendors competing to provide the best services at the best prices. As such, vendors may update their service and the way they offer such services. As market forces push and pull, vendors change. New vendors may be added.

As existing vendors change or vendors are added, the proprietary format of their offer-terms change. Furthermore, their business models change.

Consequently, components (such as applications) of the IRD device must be modified to accommodate new and different proprietary formats of the vendor's offer-terms.

With these conventional approaches, it is cumbersome and difficult to change vendors for PS providing or add additional ones. Such changes necessitate a global update to one or more components of IRD devices.

### SUMMARY

Described herein is a technology facilitating electronic commerce.

One implementation, described herein, is a standardized purchasing system for purchasing premium services over a broadcast feed from premium service providers. This implementation offers a standardized technique facilitating electronic commerce purchases. It employs a standardized offer-terms format that contains the information for creation of an official offer to a user.

With one of the implementations, described here, changing or adding premium service providers does not necessitate any changes to the one or more components of the Integrated Receiver/Decoders (IRD) devices so as to effectuate purchases of premiums services from such premium service providers. That is because purchases are handled in a standardized manner using a standardized offer-terms format.

This summary itself is not intended to limit the scope of this patent. Moreover, the title of this patent is not intended to limit the scope of this patent. For a better understanding of the invention, please see the following detailed description and appending claims, taken in conjunction with the accompanying drawings. The scope of the invention is pointed out in the appending claims.

### BRIEF DESCRIPTION OF THE DRAWINGS

The same numbers are used throughout the drawings to reference like elements and features.

Fig. 1 illustrates exemplary environment in which an implementation described herein may be employed.

Fig. 2 illustrates of an example presentation device, a television, and various input devices that interact with the presentation device.

Fig. 3 is a block diagram that illustrates components of the example presentation device(s) shown in Figs. 1 and 2.

Fig. 4 further illustrates components of the example presentation device(s) shown in Figs. 1 and 2.

Fig. 5 is a flow diagram showing a methodological implementation described herein.

### DETAILED DESCRIPTION

In the following description, for purposes of explanation, specific numbers, materials and configurations are set forth in order to provide a thorough understanding of the invention. However, it will be apparent to one skilled in the art that the invention may be practiced without the specific exemplary details. In other instances, well-known features are omitted or simplified to clarify the description of the exemplary implementations of invention, thereby better explain the invention. Furthermore, for ease of understanding, certain method steps are delineated as separate steps; however, these separately delineated steps should not be construed as necessarily order dependent in their performance.

The following description sets forth one or more exemplary implementations of an E-Commerce Facilitation for Broadcast Services that incorporate elements recited in the appended claims. These implementations are described with specificity in order to meet statutory written description, enablement, and best-mode requirements. However, the description itself is not intended to limit the scope of this patent.

The inventors intend these exemplary implementations to be examples. The inventors do not intend these exemplary implementations to limit the scope of the claimed invention. Rather, the inventors have contemplated that the claimed invention might also be embodied and implemented in other ways, in conjunction with other present or future technologies.

An example of an embodiment of an E-Commerce Facilitation for Broadcast Services may be referred to as an "exemplary e-commerce facilitation."

### Introduction

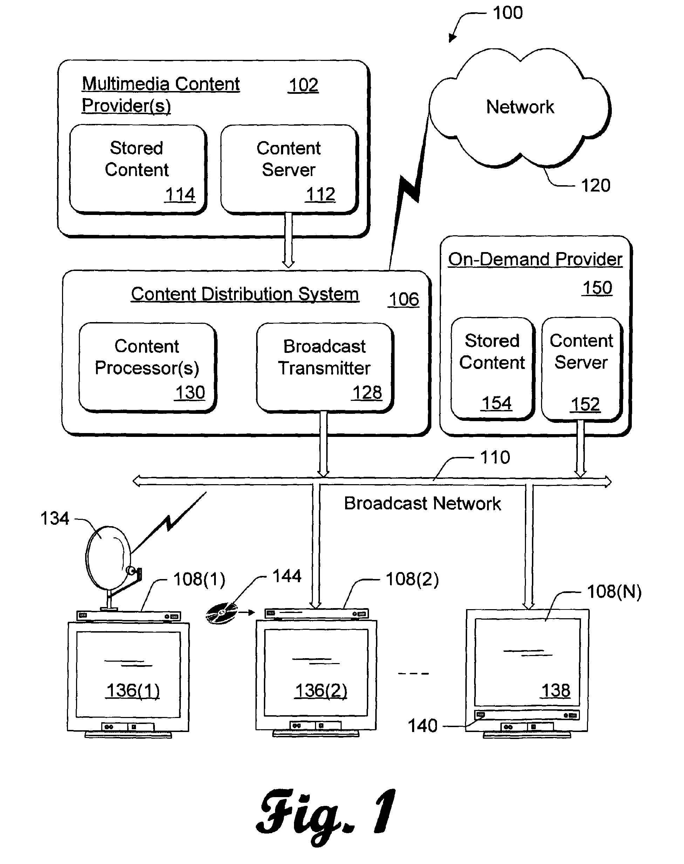

The exemplary e-commerce facilitation may be implemented (partially or wholly) on systems, devices, and/or communications networks like that shown in Figs. 1 through 3.

With these conventional approaches, it is cumbersome and difficult to change vendors for premium service providing ("premium service providers" or "PS providers") or add additional ones. With the conventional approaches, such changes necessitate a global update to one or more components of Integrated Receiver/Decoders (IRD) devices.

In addition, with conventional approaches, the communications medium conveying the offer-terms must be directly associated with the broadcast channel of the premium service. Typically, they are conveyed via in-band or out-of-band of the broadcast channel of the premium service being offered.

The exemplary e-commerce facilitation is a standardized purchasing system for purchasing premium services over a broadcast feed from premium service providers. It offers a standardized technique facilitating electronic commerce purchases. It employs a standardized offer-terms format that contains the information for creation of an official offer to a user. The instances of an offer-terms format may be called an "offer string."

With the exemplary e-commerce facilitation, changing or adding PS providers does not necessitate any changes to the one or more components of the IRD devices so as to effectuate purchases of premiums services from such PS providers. That is because purchases are handled in a standardized manner using a standardized offer-terms format.

Furthermore, with the exemplary e-commerce facilitation, the communications medium conveying the offer-terms need not be directly associated with the broadcast channel of the premium service. Consequently, the offer-terms need not be conveyed with of the broadcast channel of the premium service being offered.

With the exemplary e-commerce facilitation, a broadcast service provider (e.g., a digital satellite broadcaster) may easily change and add premium service providers (e.g., VoD servers) on the networks without wholesale changes the entire population of Integrated Receiver/Decoders (IRD) devices.

With the exemplary e-commerce facilitation, a broadcast service provider may easily change business policies without wholesale changes the entire population of IRD devices.

Also, a broadcast service provider post offer strings for premium services through other means than through the channel directly associated with the service being offered. In other words, the offer string may be separate from the medium communicating the content being offered.

With the exemplary e-commerce facilitation, the purchase providers may be separate from the premium service providers. Furthermore, the same user interface may be used for multiple purchase providers.

### Offer Strings

Offer strings may be distributed along a network (such as a broadcast network), webpage, or it can be sent along with any video. The IRD device converts an offer string into an offer object. These offer objects are presented to the viewer for purchasing.

One implementation of the offer string is represented in a standardized semantic structure, such as XML (extensible Markup Language). Below is an example of such an XML representation of an offer string:
{BAD7D263-35C9-11D3-9F7B-FFC04FB93028}
<OFFER_ID>1</OFFER_ID>
<COST>399</COST>
<CURRENCY_TYPE>USD</CURRENCY_TYPE>
<OFFER_TITLE>Title of the Show</OFFER_TITLE>
<OFFER_DESCRIPTION>All sorts of descriptive information can go here.
</OFFER_DESCRIPTION>
<START_TIME>20020305T19:30:00Z</START_TIME>
<END_TIME>20020305T20:00:00Z</END_TIME>
<PREVIEW_WINDOW>2</PREVIEW_WINDOW>

Offer strings contain information for creation of an offer object. This includes generic information common to most offer items. For example, it may include the price, length, a URL, title, description, appropriate contractual legal language, etc.. In addition, it may include proprietary information is use by only particular purchasing systems.

Offer strings may be distributed along over a broadcast feed (in-band or out-of-band), a network, a webpage, an email, or it can be sent along with a video (like from a DVD). The IRD device converts an offer string into an offer object. This object is presented to the viewer for purchasing.

With the offer strings, there may be multiple offers (e.g., multiple levels of the offer).

With the exemplary e-commerce facilitation, the offer strings may be produced and published separate from a proprietary IRD device.

### Exemplary Environment

**Fig. 1** illustrates an exemplary environment 100 in which the techniques, systems, and other aspects described herein may be implemented (partially or wholly). Exemplary environment 100 is a television entertainment system that facilitates distribution of multi-media. A typical digital video broadcast (DVB) network is an example of such an environment.

Multimedia services are available in a variety of forms. The multimedia service might be broadcast content or "broadcast feed" which may include video information as in a television broadcast, audio-only information as in a radio broadcast, or Internet data as in an Internet multicast. Multimedia services may also include access to resources on a network such as a file stored on the network. This resource might be, for example, a Web page or other file remotely stored on a Local Area Network (LAN) or on a Wide Area Network (WAN) such as the Internet.

The environment 100 includes one or more multimedia content providers 102, a content distribution system 106, and one or more presentation devices 108(1), 108(2), ..., 108(N) coupled to the content distribution system 106 via a broadcast network 110. An example of these presentation devices are Integrated Receiver/Decoders (IRD) devices.

Multimedia content provider 102 includes a content server 112 and stored content 114, such as movies, television programs, commercials, music, and similar audio and/or video content. One or more of the multimedia content providers may be a premium service provider (PS provider).

Content server 112 controls distribution of the stored content 114 from content provider 102 to the content distribution system 106. Additionally, content server 102 controls distribution of live content (e.g., content that was not previously stored, such as live feeds) and/or content stored at other locations to the content distribution system 106.

Content distribution system 106 may be coupled to a network 120, such as an intranet or the Internet. The content distribution system 106 includes a broadcast transmitter 128, and one or more content processors 130. Broadcast transmitter 128 broadcasts signals, such as cable television signals, across broadcast network 110.

Content distribution system 106 is representative of a headend service that provides multimedia content to multiple subscribers.

Broadcast network 110 can include a cable television network, RF, microwave, satellite, and/or data network, such as the Internet, and may also include wired or wireless media using any broadcast format or broadcast protocol. Additionally, broadcast network 110 can be any type of network, using any type of network topology and any network communication protocol, and can be represented or otherwise implemented as a combination of two or more networks.

Content processor 130 processes the content received from content provider 102 prior to transmitting the content across broadcast network 108. A particular content processor 130 may encode, or otherwise process, the received content into a format that is understood by the multiple presentation devices 108(1), 108(2), ..., 108(N) coupled to broadcast network 110.

Presentation devices 108 can be implemented in a number of ways. For example, a presentation device 108(1) receives broadcast content from a satellite-based transmitter via a satellite dish 134. Presentation device 108(1) is also referred to as a set-top box or a satellite receiving device. Presentation device 108(1) is coupled to a television 136(1) for presenting the content received by the presentation device (e.g., audio data and video data), as well as a graphical viewer interface. A particular presentation device 108 can be coupled to any number of televisions 136 and/or similar devices that can be implemented to display or otherwise render content. Similarly, any number of presentation devices 108 can be coupled to a single television 136.

Presentation device 108(2) is also coupled to receive broadcast content from broadcast network 110 and provide the received content to associated television 136(2). Presentation device 108(N) is an example of a combination television 138 and integrated set-top box 140. In this example, the various components and functionality of the set-top box are incorporated into the television, rather than using two separate devices. The set-top box incorporated into the television may receive broadcast signals via a satellite dish (similar to satellite dish 134) and/or via broadcast network 110. In alternate implementations, presentation devices 108 may receive broadcast signals via the Internet or any other broadcast medium.

An example implementation of the presentation device 108 is a system known as WebTV®, manufactured by the Microsoft Corporation, Inc., which uses a conventional television screen or another display unit in combination with a networked computer for composing, sending and receiving e-mail, browsing the World Wide Web (Web), accessing other segments of the Internet, and otherwise displaying information. A WebTV® system uses standard telephone lines, Integrated Services Digital Network (ISDN) lines, cable lines associated with cable television service, or the like to connect to the Internet or other wide area networks.

The exemplary environment 100 also includes on-demand content provider 152, such as Video On-Demand (VoD) providers. One or more of the on-demand content providers may be a premium service provider (PS provider).

On-demand content server 152 controls distribution of the stored on-demand content 154 from on-demand content provider 152 to a presentation device 108 via the broadcast network 110.

The stored on-demand content 154 can be viewed with a presentation device 108 through an onscreen movie guide, for example, and a viewer can enter instructions to stream a particular movie, or other stored content, down to a corresponding presentation device 108.

Presentation device 108 may access digital video from a storage medium 144, such as a DVD disk or hard drive. It provides the content from the medium to an associated television 139. Examples of such a presentation device include DVD player, a personal video recorder, etc.

### Exemplary Presentation Device

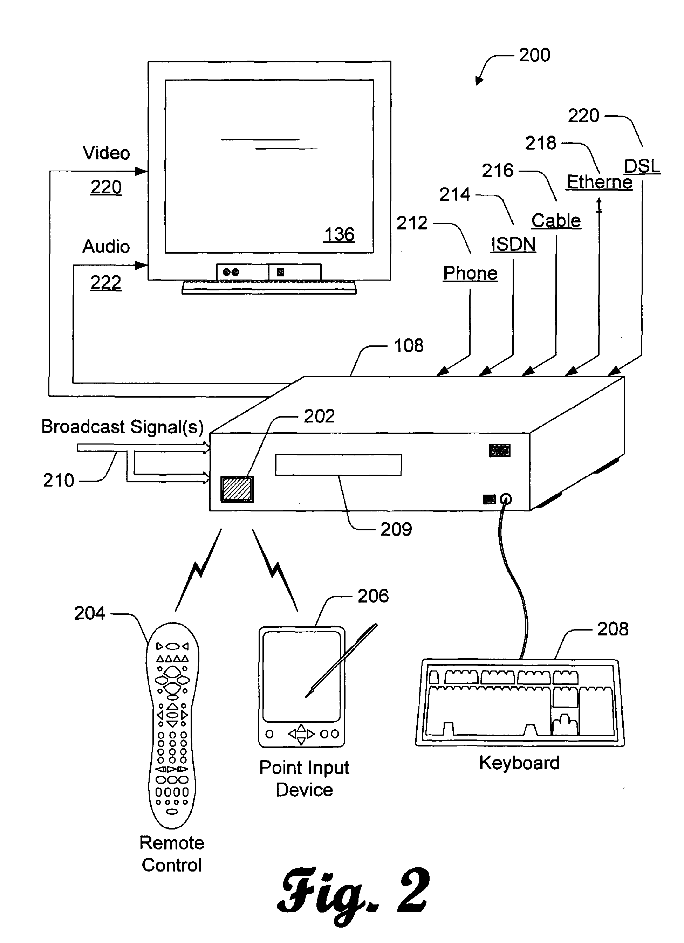

**Fig. 2** illustrates an exemplary implementation 200 of a presentation device 108 shown as a standalone unit that connects to a television 136. Presentation device 108 can be implemented in any number of embodiments, including as a set-top box, a satellite receiver, a TV recorder with a hard disk, a game console, an information appliance, a DVD player, personal video recorder, and so forth.

Presentation device 108 includes a wireless receiving port 202, such as an infrared (IR) or Bluetooth wireless port, for receiving wireless communications from a remote control device 204, a handheld input device 206, or any other wireless device, such as a wireless keyboard. Handheld input device 206 can be a personal digital assistant (PDA), handheld computer, wireless phone, or the like. Additionally, a wired keyboard 208 is coupled to communicate with the presentation device 108. In alternate embodiments, remote control device 204, handheld device 206, and/or keyboard 208 may use an RF communication link or other mode of transmission to communicate with presentation device 108.

Presentation device 108 may have a storage medium reader 209 for reading content storage media, such as DVD disks or a hard drive.

Presentation device 108 may receive one or more broadcast signals 210 from one or more broadcast sources, such as from a satellite or from a broadcast network. Presentation device 108 includes hardware and/or software for receiving and decoding broadcast signal 210, such as an NTSC, PAL, SECAM or other TV system video signal.

Presentation device 108 also includes hardware and/or software for providing the viewer with a graphical viewer interface by which the viewer can, for example, access various network services, configure the presentation device 108, and perform other functions.

Presentation device 108 may be capable of communicating with other devices via one or more connections including a conventional telephone link 212, an ISDN link 214, a cable link 216, an Ethernet link 218, a DSL link 220, and the like. Presentation device 108 may use any one or more of the various communication links 212-220 at a particular instant to communicate with any number of other devices.

Presentation device 108 generates video signal(s) 220 and audio signal(s) 222, both of which are communicated to television 136. The video signals and audio signals can be communicated from presentation device 108 to television 136 via an RF (radio frequency) link, S-video link, composite video link, component video link, or other communication link.

Although not shown in Fig. 2, presentation device 108 may include one or more lights or other indicators identifying the current status of the device. Additionally, the presentation device may include one or more control buttons, switches, or other selectable controls for controlling operation of the device.

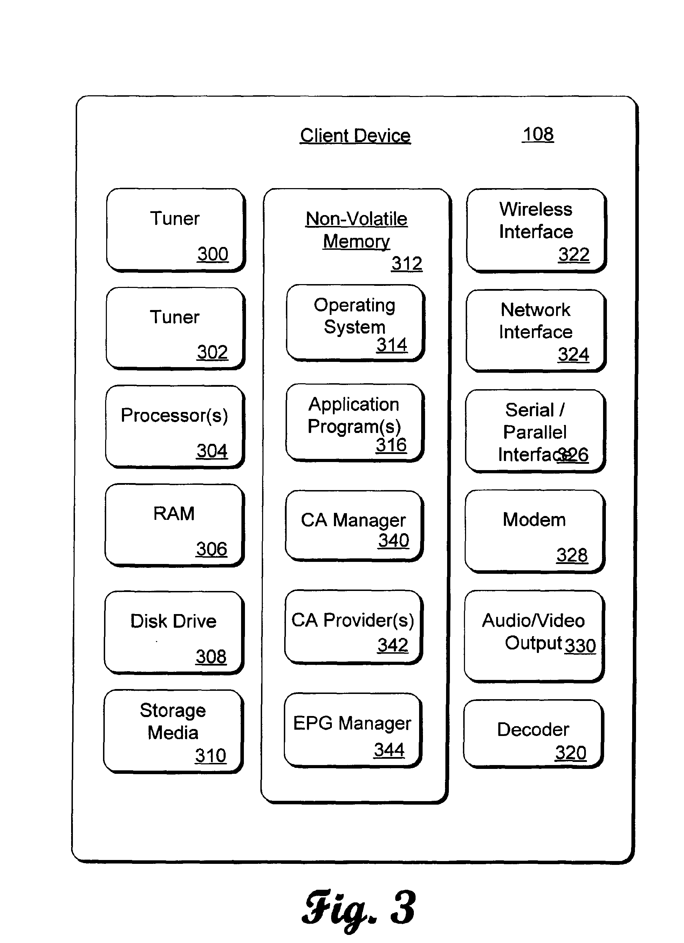

**Fig. 3** illustrates selected components of presentation device 108 shown in Figs. 1 and 2. Presentation device 108 includes a first tuner 300 and an optional second tuner 302. These tuners may be called the receiving unit. The tuners 300 and 302 are representative of one or more in-band tuners that tune to various frequencies or channels to receive television signals, as well as an out-of-band tuner that tunes to the broadcast channel over which other content may be broadcast to presentation device 108.

Presentation device 108 also includes one or more processors 304 and one or more memory components. Examples of possible memory components include a random access memory (RAM) 306, a disk drive 308, a mass storage component 310, and a non-volatile memory 312 (e.g., ROM, Flash, EPROM, EEPROM, etc.).

Alternative implementations of presentation device 108 can include a range of processing and memory capabilities, and may include more or fewer types of memory components than those illustrated in Fig. 3.

Processor(s) 304 process various instructions to control the operation of presentation device 108 and to communicate with other electronic and computing devices. The memory components (e.g., RAM 306, disk drive 308, storage media 310, and non-volatile memory 312) store various information and/or data such as multimedia content, electronic program data, web content data, configuration information for presentation device 108, and/or graphical viewer interface information. The device may cache data into any one of these many memory components.

An operating system 314 and one or more application programs 316 may be stored in non-volatile memory 312 and executed on processor 304 to provide a runtime environment. A runtime environment facilitates extensibility of presentation device 108 by allowing various interfaces to be defined that, in turn, allow application programs 316 to interact with presentation device 108.

The application programs 316 that may be implemented at presentation device 108 can include an electronic program guide (EPG), an email program to facilitate electronic mail, purchasing viewer interface, and so on.

Presentation device 108 can also include other components pertaining to a television entertainment system which are not illustrated in this example for simplicity purposes. For instance, presentation device 108 can include a viewer interface application and viewer interface lights, buttons, controls, etc. to facilitate viewer interaction with the device.

Presentation device 108 also includes a decoder 320 to decode a broadcast video signal, such as an NTSC, PAL, SECAM or other TV system video signal. Presentation device 108 further includes a wireless interface 322, a network interface 324, a serial and/or parallel interface 326, and a modem 328. Wireless interface 322 allows presentation device 108 to receive input commands and other information from a user-operated input device, such as from a remote control device or from another IR, Bluetooth, or similar RF input device.

Network interface 324 and serial and/or parallel interface 326 allows presentation device 108 to interact and communicate with other electronic and computing devices via various communication links. Although not shown, presentation device 108 may also include other types of data communication interfaces to communicate with other devices. Modem 328 facilitates presentation device 108 communication with other electronic and computing devices via a conventional telephone line.

Presentation device 108 also includes an audio/video output 330 that provide signals to a television or other device that processes and/or presents or otherwise renders the audio and video data. This output may be called the display.

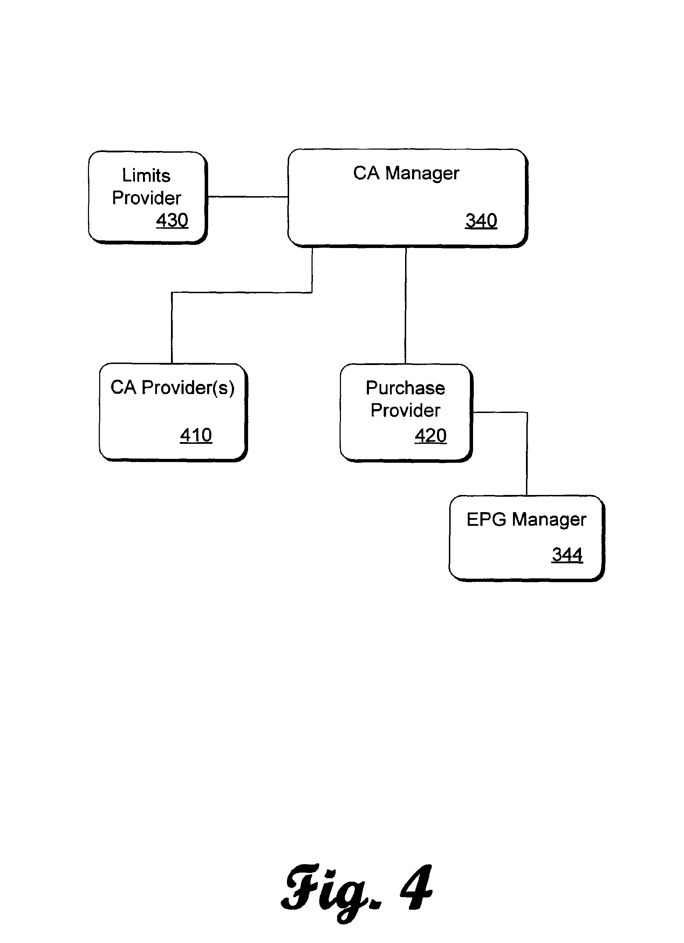

Presentation device 108 also includes additional components: a conditional access manager 340, one or more conditional access providers 342, and an EPG manager 344. These components partially or wholly implement the exemplary e-commerce facilitation. These components may be application program or a hardware component. Furthermore, these components are described further in the description of Fig. 4.

Although shown separately, some of the components of presentation device 108 may be implemented in an application specific integrated circuit (ASIC). Additionally, a system bus (not shown) typically connects the various components within presentation device 108.

A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

### Conditional Access Components

**Fig. 4** illustrations components of an IRD device (such as the presentation device 108) that control which portions of a broadcast feed are appropriate for presentation to the viewer. Examples of these components may include the conditional access (CA) manager 340, the one or more conditional access (CA) providers 410, a purchase provider 420, a limits provider 430, and an EPG manager 344. The purchase provider 420 and limits provider 430 are specific examples of one of the CA providers (which are labeled 342 in Fig. 3 and 410 in Fig. 4).

These components are software and/or hardware modules that enable providers of the multimedia segments to condition access to their multimedia segments upon certain conditions. They may be implemented as an interface such as an Application Program Interface (API) to utilize the services of each of the conditional access providers.

The CA manager 340 acts as a control and an interface between the conditional access providers and the rest of the multimedia system (including the presentation device 108). Since the interface is standard, the conditional access provider software is not informed of anything about the details of the multimedia system. Furthermore, the multimedia system is not informed of any of the details of the conditional access providers. Thus, the multimedia system and the conditional access providers can interoperate without proprietary information concerning the multimedia system and the conditional access provider being disclosed to each other.

In order to access a multimedia segment (e.g., broadcast channel), the multimedia system receives a request to access the multimedia segment (e.g., broadcast channel). For example, a viewer may request a television program using a remote control, or a viewer may request a Web page using an Internet browser.

During the process of accessing the multimedia segment (e.g., broadcast channel), the conditional access providers (which are labeled 342 in Fig. 3 and 410 in Fig. 4) are notified of the request through the conditional access manager. Each conditional access provider then determines whether permission to access the multimedia segment (e.g., broadcast channel) should be denied, or whether the conditional access provider does not know of any reason why permission to access the multimedia segment should be denied.

If any of the conditional access providers determines that permission to access the multimedia segment should be denied, the multimedia segment is not presented. On the other hand, if none of the conditional access providers determines that permission to access the multimedia segment (e.g., broadcast channel) should be denied, and at least one of the conditional access providers determines that permission to access the multimedia segment should be granted, the multimedia broadcast segment is presented. If the multimedia segment is presented, but one of the conditional access providers later determines that permission to access should be denied, the presentation of the multimedia segment is then blocked.

A "multimedia segment" is defined as any resource that includes viewable and/or hearable data. Examples of a multimedia segment include television programs, radio programs, Internet multicasts, Web pages or any other resource that results in viewable and/or hearable data. The multimedia segment may, for example, be a broadcast originating from a remote broadcaster, or may be a resource downloaded from a remote site over a Wide Area Network such as the Internet.

The multimedia segment may also be a resource read over a Local Area Network or may also be a recorded broadcast. Essentially, the principles of the exemplary e-commerce facilitation allow for access to multimedia segments to be limited regardless of the source or format of the multimedia segments.

The principles of the exemplary e-commerce facilitation allow for the interfacing with multiple conditional access providers even if those conditional access providers require different interfaces. Traditionally, if a device was to interface with multiple conditional access providers, a separate interface would be needed for each type of conditional access provider. Each separate interface required additional programming development time. The exemplary e-commerce facilitation allows for a single interface to interact with each conditional access provider thereby providing a more standardized interface.

### Conditional Access

The conditional access provider may control the display of, for example, pay-per-view programs, other premium channel programs, and premium Web pages. Furthermore, the conditional access provider may allow a parent to set ratings limits so that multimedia, television programs, or Web pages that have certain ratings are not displayed.

Parental control is an example of conditional access provided by the CA manager 340 and the limits provider 430. For example, parents may wish to control their children's access to broadcast segments having certain content. A parent might do this by watching a broadcast segment with the child and changing the channel when questionable content is presented.

Unfortunately, parents may not always be able to watch the entire broadcast segment with the child. The limits provider 430 helps parents set local policy limits on the broadcast segments that are presented to their children. These limits providers help parents set limits independent from any conditional access control desired by the content broadcaster.

Limits provider: Example of it is the parental control system. When someone goes to acquire content for viewing, the CA manager is notified; the CA manager queries all of these providers to see if there is any problem with displaying the requested content.

The limits provider may talk to the EPG provider (and maybe the V-chip rating) and determines the rating. Based upon the rating, it will specify whether the program may or may not be viewed.

The limits provider 430 may also implement business logic for the presentation of premium services. For example, there may be a limit to how long a view may watch a movie (e.g., three days). Another example, the limits provider may determine whether the viewer is allowed to record the content of the broadcast feed.

Pay-per-view access is an example of conditional access provided by the CA manager 340 and the purchase provider 420. A broadcast data provider, such as a television or radio broadcaster, may have a right to condition access to certain broadcast content on the satisfaction of certain conditions. For instance, a pay-per-view provider (which is an example of a premium service provider) may condition access on a viewing contracting to pay for actually viewing a broadcast. Furthermore, a premium channel provider may condition access upon the viewer subscribing to the premium channel.

The IRD device enforces such conditional access to broadcast content on a client-by-client basis at the receiver end of a broadcast network. The CA manager 340 and the purchase provider 420 ensure that the broadcast segment is not presented unless these conditions are satisfied. Once the conditions for access have been satisfied, the CA manager 340 permits the relevant broadcast content segment to be presented to the user.

### E-Commerce using Offer Strings

In order for a viewer to enter into a contract to purchase premium services (e.g., pay-per-view programming), the viewer is presented with offer terms. Those terms include, for example, cost, title, timing, descriptive information, and appropriate contractual legal language.

With the exemplary e-commerce facilitation, these offer-terms are encapsulated into a standard format called an "offer string." This string may be stored with the EPG (e.g., acquired from the EPG manager 344), in a web page, in an email message, and/or be transmitted via in-band or out-of-band data. With the offer string, the IRD device creates an offer object for presentation to the user. Using the user-interface of the IRD device, the viewer may purchase the premium service being offered.

The purchase provider 420 creates an instance of offer object based upon an offer string. The purchase provider passes these offer object instances to the CA manager 340. A user-interface (UI) is generated based upon these offer object instances to effect a purchase.

These offer objects may include a specific purchase API. It may include a method for performing various actions related to purchases. The purchase API may include several specific offer terms, for example:
- price
- length
- URL
- title
- description
- explanation

Example of when an instances of an offer object is generated with the exemplary e-commerce facilitation:
- The IRD device (or an application of the device) acquires an offer string;
- the purchase provider generates an offer instance based upon that offer string;
- the offer instance is passed to an application;
- the application presents an "offer" to the viewer using a UI;
- if the viewer accepts, then the application calls purchase on the offer;
- in response, the purchase instance might do several things, including one or more system specific task related to purchasing, such as interact with hardware to cause the purchase to take place. It might communicate with a server, checks credit card, checks credit balance, etc.

In this example, the PS provider does not handle the purchase. Rather, it is handled by the purchase provider.

In this example, the IRD device (or an application of the device) acquires an offer string. It may acquire the string in numerous ways. For example, the viewer may tune to a pay-per-view channel. From the channel, the IRD device gathers information for an offer from an offer string associated with the channel. The offer strings may be part of a channel or services. In-band (includes line 21, MPEG table, teletext, MPEG descriptors, etc.) or out-of-band.

In this example, the IRD device gathered information for an offer from an offer string associated with the channel. Alternatively, it may acquire the offer string from other sources that are not directly associated (e.g., in-band data) with a broadcast feed.

With this scenario, a specific multimedia segment (e.g., broadcast channel) pops-up an offer for the viewer to purchase a premium service on another multimedia segment. For example, a viewer is watching a general sports channel and gets an offer to purchase pay-per-view sports on another channel.

Examples of other sources include web pages, e-mail messages, a plain text string, a smart card, a multimedia storage medium (e.g., DVD), a data storage medium, other broadcast feeds (that are not associated with multimedia segment offering the premium service).

Another way that the IRD device acquires the offer string is from the EPG manager 344. It asks for the "offer string" for a particular program. The offer string is opaque to the EPG manager, but the purchase provider understands it.

In many of these examples, the offer string is not communicated via the same broadcast feed associated with the offer.

With the exemplary e-commerce facilitation, purchases of premium services may be executed via the IRD device alone. With it, it is not necessary to execute purchase via a separate mechanism (like the phone or a web browser).

### Methodological Implementation of the Exemplary E-Commerce Facilitation

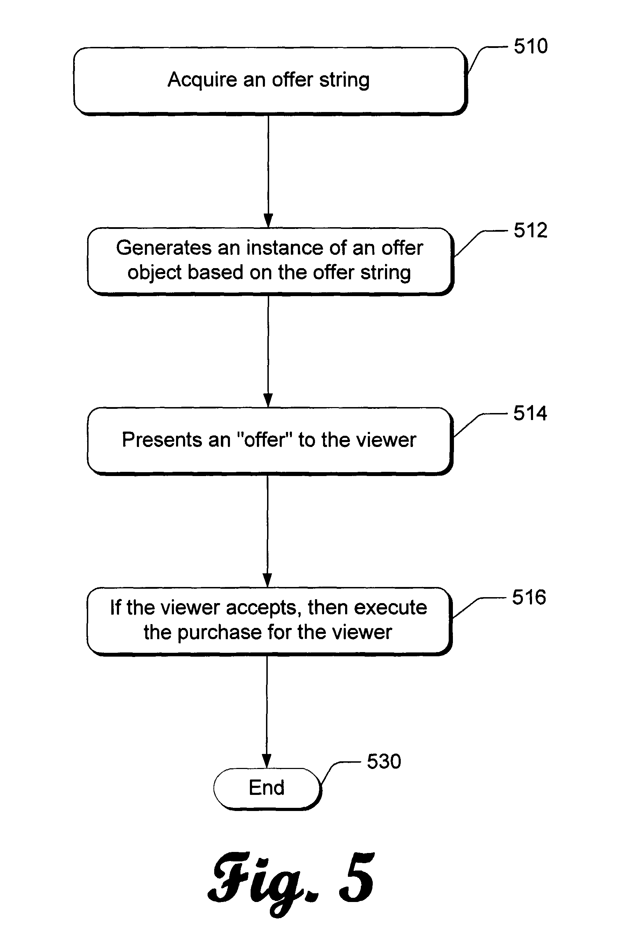

**Fig. 5** shows a methodological implementation of the exemplary e-commerce facilitation. This methodological implementation may be performed in software, hardware, or a combination thereof.

At 510 of Fig. 5, the exemplary e-commerce facilitation acquires an offer string. It may be acquired from various sources, including those described herein.

At 512, the exemplary e-commerce facilitation generates an instance of an offer object and sends to the requesting application.

The CA manager 340 is asked to provide an instance of an offer object based upon the acquired offer string. The CA manager 340 determines the association between the offer string and one of the purchase providers (such as provider 420). The CA manager 340 passes the offer string to the purchase provider. The purchase provider produces an instance of an offer object and sends to the requesting application.

At 514, the exemplary e-commerce facilitation presents an "offer" to the viewer using a UI.

At 516, if the viewer accepts, then the exemplary e-commerce facilitation executes the purchase for the viewer. Using the information of the offer string and provided by the viewer, it might do several things, including one or more system specific task related to purchasing, such as interact with hardware to cause the purchase to take place. It might communicate with a server, checks credit card, checks credit balance, etc.

The process ends at 530.

### Computer-Executable Instructions

An implementation of an exemplary e-commerce facilitation may be described in the general context of computer-executable instructions, such as program modules, executed by one or more computers or other devices. Generally, program modules include routines, programs, objects, components, data structures, etc. that performs particular tasks or implement particular abstract data types. Typically, the functionality of the program modules may be combined or distributed as desired in various embodiments.

### Computer Readable Media

An implementation of an exemplary e-commerce facilitation may be stored on or transmitted across some form of computer readable media. Computer readable media may be any available media that may be accessed by a computer. By way of example, and not limitation, computer readable media may comprise "computer storage media" and "communications media."

"Computer storage media" include volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

"Communication media" typically embodies computer readable instructions, data structures, program modules, or other data in a modulated data signal, such as carrier wave or other transport mechanism. Communication media also includes any information delivery media.

The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

### Conclusion

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. In a multimedia presentation system that receives a broadcast feed having multiple multimedia segments with one or more segments being premium broadcast services, a computer-readable medium having computer-executable instructions that, when executed by the system, performs a method comprising:
obtaining an offer string from a source that is not directly associated with a multimedia segment of the premium broadcast service;
generating an instance of an offer object based upon the obtained offer string;
presenting a user with an offer based upon the instance of an offer object;
executing a purchase of a premium broadcast service from a premium broadcast service provider when a user accepts the offer;
receiving the premium broadcast service from the premium broadcast service provider.

2. A medium as recited in claim 1, wherein the obtaining comprises acquiring the offer string from one or more sources selected from a group consisting of:
• in-band data of a multimedia segment that is not associated with the premium broadcast service;
• out-of-band data of a multimedia segment that is not associated with the premium broadcast service;
• an electronic program guide;
• a web page;
• an e-mail message;
• an instant message;
• an Internet transmission;
• a string of plain text;
• a smart card;
• a storage medium;
• a multimedia storage medium; and
• a DVD.

3. A medium as recited in claim 1, wherein the offer string is a data structure comprising multiple offer-term fields selected from a group consisting of:
• price;
• length;
• URL;
• title;
• description;
• explanation; and
• legal contractual language.

4. A medium as recited in claim 1, wherein the offer string is a standardized data structure in XML.

5. A presentation device comprising:
an audio/visual output;
a medium as recited in claim 1.

6. In a multimedia presentation system that receives a broadcast feed having multiple multimedia segments with one or more segments being premium broadcast services, a computer-readable medium having computer-executable instructions that, when executed by the system, performs a method comprising:
obtaining an offer string;
generating an instance of an offer object based upon the obtained offer string;
presenting a user with an offer based upon the instance of an offer object;
executing a purchase of a premium broadcast service from a premium broadcast service provider when a user accepts the offer.

7. A medium as recited in claim 6 further comprising receiving the premium broadcast service from the premium broadcast service provider.

8. A medium as recited in claim 6, wherein the obtaining comprises acquiring the offer string from a multimedia segment that is not directly associated with a multimedia segment of the premium broadcast service.

9. A medium as recited in claim 6, wherein the obtaining comprises acquiring the offer string from a source not directly associated with a multimedia segment of the premium broadcast service.

10. A medium as recited in claim 6, wherein the obtaining comprises acquiring the offer string from one or more sources selected from a group consisting of:
• in-band data of a multimedia segment associated with the premium broadcast service;
• out-of-band data of a multimedia segment associated with the premium broadcast service;
• in-band data of a multimedia segment that is not associated with the premium broadcast service;
• out-of-band data of a multimedia segment that is not associated with the premium broadcast service;
• an electronic program guide;
• a web page;
• an e-mail message;
• an instant message;
• an Internet transmission;
• a string of plain text;
• a smart card;
• a storage medium;
• a multimedia storage medium; and
• a DVD.

11. A medium as recited in claim 6, wherein the offer string is a data structure comprising multiple offer-term fields selected from a group consisting of:
• price;
• length;
• URL;
• title;
• description;
• explanation; and
• legal contractual language.

12. A medium as recited in claim 6, wherein the offer string is a standardized data structure in a hierarchical mark-up language.

13. A medium as recited in claim 6, wherein the offer string is a standardized data structure in XML.

14. A presentation device comprising:
an audio/visual output;
a medium as recited in claim 6.

15. In a multimedia presentation system that receives a broadcast feed having multiple multimedia segments with one or more segments being premium broadcast services, a method comprising:
obtaining an offer string from a source that is not directly associated with a multimedia segment of the premium broadcast service;
generating an instance of an offer object based upon the obtained offer string;
presenting a user with an offer based upon the instance of an offer object;
executing a purchase of a premium broadcast service from a premium broadcast service provider when a user accepts the offer;
receiving the premium broadcast service from the premium broadcast service provider.

16. A method as recited in claim 15, wherein the obtaining comprises acquiring the offer string from one or more sources selected from a group consisting of:
• in-band data of a multimedia segment that is not associated with the premium broadcast service;
• out-of-band data of a multimedia segment that is not associated with the premium broadcast service;
• an electronic program guide;
• a web page;
• an e-mail message;
• an instant message;
• an Internet transmission;
• a string of plain text;
• a smart card;
• a storage medium;
• a multimedia storage medium; and
• a DVD.

17. A method as recited in claim 15, wherein the offer string is a data structure comprising multiple offer-term fields selected from a group consisting of:
• price;
• length;
• URL;
• title;
• description;
• explanation; and
• legal contractual language.

18. A method as recited in claim 15, wherein the offer string is a standardized data structure in XML.

19. A presentation device comprising:
one or more application modules configured to obtain an offer string and send it to a conditional access manager;
the conditional access manager configured to determine a purchase provider associated an offer string and send the offer string to that associated purchase provider;
one or more conditional access providers configured to determine conditional access to one or more multimedia segments of a broadcast feed;
wherein one or more of the conditional access providers are purchase providers configured to convert the offer string into an instance of an offer object;
the one or more application modules being further configured to present an offer based upon the instance of the offer object.

20. A presentation device as recited in claim 19, wherein the one or more application modules obtain the offer string from a multimedia segment that is not directly associated with a multimedia segment of the premium broadcast service.

21. A presentation device as recited in claim 19, wherein the one or more application modules obtain the offer string from a source not directly associated with a multimedia segment of the premium broadcast service.

22. A presentation device as recited in claim 19, wherein the one or more application modules obtain the offer string from one or more sources selected from a group consisting of:
• in-band data of a multimedia segment associated with the premium broadcast service;
• out-of-band data of a multimedia segment associated with the premium broadcast service;
• in-band data of a multimedia segment that is not associated with the premium broadcast service;
• out-of-band data of a multimedia segment that is not associated with the premium broadcast service;
• an electronic program guide;
• a web page;
• an e-mail message;
• an instant message;
• an Internet transmission;
• a string of plain text;
• a smart card;
• a storage medium;
• a multimedia storage medium; and
• a DVD.

23. A presentation device as recited in claim 19, wherein the offer string is a data structure comprising multiple offer-term fields selected from a group consisting of:
• price;
• length;
• URL;
• title;
• description;
• explanation; and
• legal contractual language.

24. A presentation device as recited in claim 19, wherein the offer string is a standardized data structure in a hierarchical mark-up language.

25. A presentation device as recited in claim 19, wherein the offer string is a standardized data structure in XML.

26. A computer-readable medium having stored thereon a data structure comprising an offer string having multiple offer-term fields regarding a premium service being offered, the fields being selected from a group consisting of:
• price;
• length;
• URL;
• title;
• description;
• explanation; and
• legal contractual language.
